# EUROPEAN PATENT APPLICATION

(11) **EP 4 646 912 A1**
(43) Date of publication of application: **12.11.2025**
(21) Application number: 25152002.9
(22) Date of filing: 15.01.2025
(51) Int. Cl.: A01D 41/127, A01B 69/04, G01C 21/00, G05D 1/00, G05D 1/43, G05D 1/646, G05D 101/20, G05D 105/15, G05D 107/20, G05D 111/10

(54) **DIRECTION INFORMATION FOR A HARVESTING VEHICLE**

(30) Priority: 08.05.2024 GB 202406435
(71) Applicant: AGCO International GmbH, 8212 Neuhausen am Rheinfall (CH)
(72) Inventor: TARRAGONA, Ramon Buchaca, 8930 Randers (DK); CHRISTIANSEN, Martin Peter, 8930 Randers (DK)
(74) Representative: AGCO Intellectual Property Department

(57) **Abstract**

A process for generating directional information indicating a target direction for a combine harvester. Point cloud data representing a region ahead of the harvester is obtained and processed to identify a target region enclosing a representation of unharvested crop. The directional information is generated by processing an edge of the target region to determine a target direction that would result in the harvester harvesting the edge of the unharvested crop.

## Description

### FIELD

Embodiments of the present disclosure relate generally to harvesting vehicles.

### BACKGROUND

In the agricultural industry, there are a wide variety of harvesting vehicles that are used to cut and process standing (i.e., unharvested) crop. Examples of such harvesting vehicles include combine harvesters, forage harvesters and windrowers, although other examples will be known to the suitably skilled person.

A harvesting vehicle is steered, either manually or autonomously, to harvest (standing) crop within a field. One known risk of operating a harvesting vehicle is that some crop may be left unharvested. This risk is particularly prevalent when the steering of the harvesting vehicle is performed by an inexperienced operator or by an autonomous steering system that functions using unreliable or inaccurate location information.

Even assuming the failure to harvest some crop is noticed, then the unharvested crop (left standing after a pass of the harvesting vehicle) would require the harvesting vehicle to travel over an already harvested region to reattempt harvesting, significantly reducing an efficient use of the harvesting vehicle.

There is therefore a clear desire for a mechanism that facilitates a reduction in unharvested crop.

### BRIEF SUMMARY

The invention is defined by the claims. According to examples in accordance with this disclosure, there is provided a computer-implemented method of generating directional information for a harvesting vehicle. The computer-implemented method comprises receiving point cloud data comprising a representation of a region ahead of the harvesting vehicle, processing the point cloud data to identify a target region, in the point cloud data, that bounds a representation of unharvested crop in the point cloud data, and generating the directional information by processing an edge of the target region, wherein the directional information indicates a target direction for the harvesting vehicle to harvest the edge of the unharvested crop.

The present disclosure proposes the use of data produced by a sensor (preferably a LIDAR sensor) to identify a direction in which a harvesting vehicle should travel to intersect an edge of unharvested crop. The directional information advantageously provides information on how the harvesting vehicle should be maneuvered or steered to reduce a risk of leaving (at least some) crop unharvested. In particular, the directional information could be used by an operator of the harvesting vehicle and/or an autonomous control system of the harvesting vehicle to steer or direct the harvesting vehicle to harvest the edge of unharvested crop.

In some examples, the sensor is mounted to a cab of the harvesting vehicle. Such a position will provide the sensor with a broad view of the region ahead of the harvesting vehicle.

The harvesting vehicle may also comprise a crop cutting arrangement (e.g., a header) that has a predetermined spatial relationship with respect to the sensor, i.e., the relative positions of the crop cutting arrangement and the sensor, as mounted on the harvesting vehicle, may be known.

Accordingly, the target direction may indicate a direction in which the crop cutting arrangement is predicted to intersect with the edge of the unharvested crop, e.g., determined from the position of the edge of the unharvested crop (measured by, and therefore relative to, the sensor) and the predetermined spatial relationship between the crop cutting arrangement and the sensor.

In some examples, the step of processing the point cloud data may comprise performing segmentation on the point cloud data to identify the representation of unharvested crop. The point cloud data may thus be segmented into regions of different crop composition (e.g., unharvested and harvested)

In some examples, the step of generating the directional information may comprise processing the target region to identify edge data elements, being data elements of the point cloud data that represent an edge of the target region, and processing the identified edge data elements to generate the directional information.

Furthermore, the step of processing the identified edge data elements may comprise performing segmentation on the identified edge data elements to identify a line representing the edge of the target region and processing the identified line to generate the directional information. In such cases, the generated directional information may describe a vector (or a series of vectors) that lies along, or is otherwise parallel to, the identified line and indicates a direction of travel for the harvesting vehicle.

The step of generating the directional information may further comprise monitoring a travel direction of the harvesting vehicle, processing the monitored travel direction to identify an edge of a harvesting region in the point cloud data, wherein the harvesting region bounds a representation of a zone that the harvesting vehicle would harvest if proceeding in the monitored travel direction, and processing the edge of the target region and the edge of the harvesting region to identify a target direction for the harvesting vehicle that would align the edge of the harvesting region with the edge of the target region.

In some cases, the monitored travel direction and the point cloud data may be defined using different co-ordinate systems. For example, the different coordinate systems may be defined relative to different reference points on the harvesting vehicle, or may use different units or measurement systems (e.g., satellite navigation coordinates and/or bearings for the monitored travel direction and meters for the point cloud data).

Accordingly, the step of generating the directional information may comprise transforming the co-ordinate system of the monitored travel direction and/or the point cloud data such that the travel direction and the point cloud data share a common co-ordinate system.

For example, transforming the co-ordinate system of the monitored travel direction and/or the point cloud data may comprise transforming the point cloud data to the co-ordinate system of the monitored travel direction.

In some examples, the computer-implemented method may further comprise controlling a display to provide a user-perceptible output of the directional information. A user may thus adjust a trajectory/steering of the harvesting vehicle responsive to the perceived directional information.

In some examples, the computer-implemented method may comprise monitoring a direction of the harvesting vehicle and controlling an alert system to generate a user-perceptible alert responsive to the monitored direction deviating by more than a predetermined amount from the target direction. Similar to the above, a user may thus adjust a trajectory of the harvesting vehicle responsive to the perceived alert.

The computer-implemented method may further comprise controlling a steering of the harvesting vehicle, responsive to the directional information, to follow the target direction. Such an approach may be utilized by an autonomous control system of the harvesting vehicle.

In some examples, the computer-implemented method may further comprise obtaining a target route for the harvesting vehicle, wherein the target route is generating using mapping data of an area for harvesting by the harvesting vehicle, controlling a steering of the harvesting vehicle to follow the target route, and updating the target route responsive to the directional information.

There is also provided a computer program product comprising computer program code means which, when executed on a computing device having a processing system, cause the processing system to perform all of the steps of any computer-implemented method according to the above disclosure.

There is also proposed a processing system for generating directional information for a harvesting vehicle. The processing system is configured to receive point cloud data comprising a representation of a region ahead of the harvesting vehicle, process the point cloud data to identify a target region, in the point cloud data, that bounds a representation of unharvested crop in the point cloud data, and generate the directional information by processing an edge of the target region, wherein the directional information indicates a target direction for the harvesting vehicle to harvest the edge of the unharvested crop.

There is also provided a harvesting vehicle comprising the above processing system and a sensor configured to generate the point cloud data.

### BRIEF DESCRIPTION OF THE DRAWINGS

One or more embodiments of the invention / disclosure will now be described, by way of example only, with reference to the accompanying drawings, in which:
FIG. 1 illustrates a harvesting vehicle in which embodiments can be employed;
FIG. 2 illustrates a side-view of a portion of the harvesting vehicle;
FIG. 3 illustrates a top-down view of a portion of the harvesting vehicle;
FIG. 4 is a flowchart illustrating a proposed method;
FIG. 5 is a flowchart illustrating an embodiment of the proposed method;
FIG. 6 is a flowchart illustrating another embodiment of the proposed method;
FIG. 7 is a flowchart illustrating yet another embodiment of the proposed method;
FIG. 8 illustrates a proposed system; and
FIG. 9 illustrates an embodiment of the proposed system.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a technique for generating directional information for a harvesting vehicle. Point cloud data is received that represents a region ahead of the harvesting vehicle, preferably containing harvested and unharvested crop. The point cloud data is processed to identify a target region that bounds a representation of the unharvested crop, and the directional information is generated responsive to an edge of the target region. In particular, the edge represents an edge of the unharvested crop, with the directional information indicating a target direction for the harvesting vehicle to harvest at the edge of the unharvested crop.

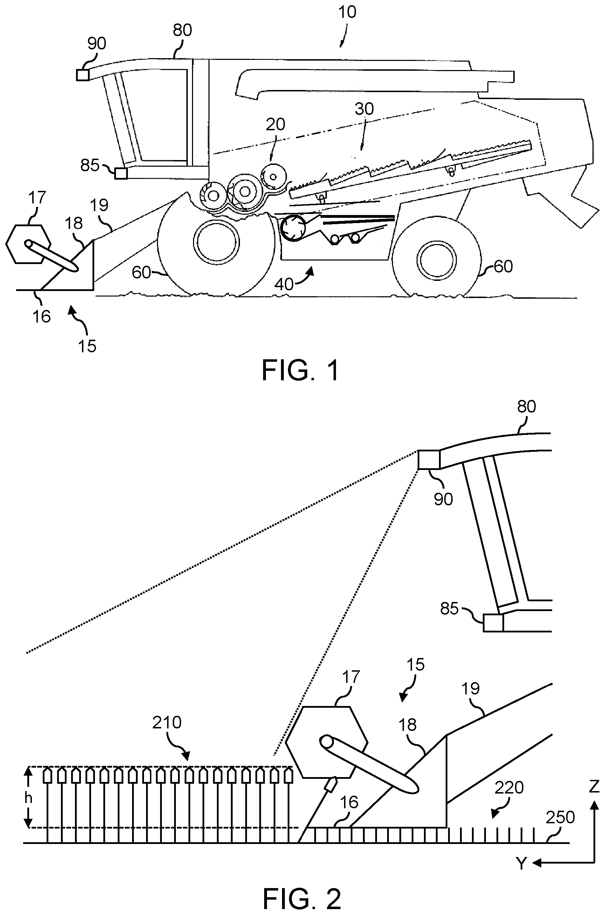

FIG. 1 shows a harvesting vehicle 10 in the form of a known combine harvester to which herein proposed approaches may be applied.

The harvesting vehicle 10 comprises a plurality of crop processing arrangements. The crop processing arrangement sequentially or consecutively processes crop (material), to thereby produce a crop flow through the combine harvester. The crop processing arrangements can therefore be considered to be upstream or downstream, with respect to crop flow, of one another.

In the illustrated example, the plurality of crop processing arrangements typically comprises a crop cutting arrangement 15, a feeder 19, a beater or threshing system 20, a separator system 30, and a grain cleaning apparatus 40.

Of course, although not necessarily visible in FIG. 1, the plurality of crop processing arrangements may comprise further arrangements, e.g., a discharger system, a grain transporter for transporting grain from the separator system to a hopper, and so on.

The crop cutting arrangement 15 (commonly known as, and from herein referred to as, the header) typically comprises a wide laterally extending transverse auger that serves to cut and collect the crop material as the harvesting vehicle 10 progresses across a field. The header 15 comprises a cutter bar 16 that engages with a base of the crop to cut the crop. The header 15 also comprises a reel 17 or harvesting reel. The reel is configured to engage with a top of the crop and encourage or guide the crop into the header 15. A conveyor 18 is configured to convey the crop, cut by the cutter bar 16, into a feeder 19.

Generally, the reel 17 comprises a plurality of tine bars (each comprising a plurality of tines) that sequentially engage with the top of the crop as the reel 17 rotates. The tines of each tine bar act to lift and separate the crop, and to guide the crop towards the header 15, particularly the conveyor 18 of the header 15.

The header 15 is attached to the feeder 19 (here embodied as a front elevator housing) that receives the cut crop (material) from the header 15. The feeder 19 delivers the cut crop to a threshing system 20 for detaching grains of cereal from the ears of cereal. In this way, the threshing system 20 is downstream of the feeder 19. The threshing system comprises one or more threshing units, in particular rotors, and associated concaves.

In the example shown, the threshing system 20 is a tangential-flow 'conventional' threshing system, i.e. formed by rotating elements with an axis of rotation in the side-to-side direction of the harvesting vehicle and for generating a tangential flow. For example, the 'conventional' threshing system includes a rotating, tangential-flow, threshing cylinder and a concave-shaped grate. The threshing cylinder includes rasp bars (not shown) which act upon the crop stream to thresh the grain or seeds from the remaining material. The majority of the threshed grain pass through an underlying grate and onto a stratification pan (also sometimes known as the grain pan).

There are also axial threshing systems, i.e. formed by rotating elements with an axis of rotation in the longitudinal direction (direction of travel). For example, the threshing section may have axially-aligned rasp bars spaced around the front section whilst the separating section has separating elements or fingers arranged in a pattern, e.g. a spiral pattern, extending from the rasp bars to the rear of the rotor.

A separator system 30 is connected downstream of the threshing system 20, so as to receive crop (material) that has been processed by the threshing system 20. The separator system 30 serves to separate further grain from the received crop, and this separated grain passes through a grate-like structure into an underlying return pan.

The threshing system 20 and the separating system 30 typically do not remove all material other than grain ("MOG") from the grain so that the material collected by the stratification pan and the return pan includes a proportion of straw, chaff, tailings, and other unwanted material. This collected material is passed to a grain cleaning apparatus 40 to separate out the unwanted material and thus leave a clean sample of grain.

The disclosed plurality of crop processing arrangements thus produces a crop stream that converts newly cut crop into grain.

The harvesting vehicle 10 further comprises a plurality of wheels 60 for driving the harvesting vehicle 10 forwards and backwards, and for steering the harvesting vehicle 10 in a given direction. When driven forwards, the header 15 may cut and collect unharvested crop, i.e., through engagement of the cutting bar 16 with the base of the unharvested crop. In some embodiments, other or additional forms of travel may be used, such as tracks.

The operation of the harvesting vehicle 10 may be controlled by a control system (not shown). The control system may control operation of various units and apparatus of the harvesting vehicle 10 responsive to one or more received inputs from a user interface and/or sensing apparatus. More specifically, the one or more received inputs may be provided to a processing system (e.g., comprised by, or separate from, the control system) configured to process the one or more received inputs to determine one or more corresponding operations and/or parameters for the harvesting vehicle 10. The processing system may then provide one or more control signals (e.g., electrical signals, wireless signals, etc.) to control circuitry of the control system to control aspects of the harvesting vehicle.

The harvesting vehicle 10 may also comprise a user support 80, e.g., a cab, for housing an operator of the harvesting vehicle 10. The user support will often contain a user interface to allow the operator/individual to influence or control the operation of the elements of the harvesting vehicle 10 (e.g. via the control system). The user interface may provide information about the harvesting vehicle 10 and/or the status of the harvesting vehicle 10. The user interface may also provide information collected by the harvesting vehicle 10. Said information may be provided on a display and/or by an alert system of the user interface.

The harvesting vehicle 10 may also comprise a guidance system 85. In particular, the guidance system 85 may comprise a satellite navigation system such as a global positioning system (GPS) (preferably an RTK GPS) and/or an inertial navigation system (INS). The guidance system 85 may thus provide guidance information (e.g., satellite navigation coordinates, latitude and longitude, bearings, speed/velocity, etc.) of the harvesting vehicle 10, or more specifically of a reference position (i.e., the position of the positioning system 85) on the harvesting vehicle 10. The guidance system 85 thus defines a position, orientation and/or velocity of the harvesting vehicle 10 in a known coordinate system.

The guidance system 85 may be positioned on the harvesting vehicle 10 so as to define a reference point on, or significantly close to, a notable part of the harvesting vehicle, such as on the user support 80 (thereby assigning the reference point to the position of the operator) or on the header 15 (thereby assigning the reference point to the position of the cutting arrangement of the harvesting vehicle 10). The position/coordinates of other parts of the harvesting vehicle 10 may be determined responsive to the guidance information and a known positional relationship between the other parts of the harvesting vehicle 10 and the guidance system 85.

The guidance system 85 may be utilized by the control system for monitoring a position and/or travel of the harvesting vehicle 10. In some embodiments, the control system may be an autonomous control system for operating the harvesting vehicle 10 without input from an operator. The autonomous control system may, for example, control the harvesting vehicle to move along a target route (e.g., that defines a route through a field), where a position and progress of the harvesting vehicle 10 along the target route is monitored with reference to the guidance information provided by the guidance system 85.

The harvesting vehicle 10 may further comprise a sensor 90 for use in proposed embodiments of the invention. The sensor 90 is configured to generate a representation of a region ahead of the harvesting vehicle 10. The sensor 90 is thus provided on a front portion of the harvesting vehicle 10 (e.g., on a front portion of the user support 80, as illustrated) to provide the sensor 90 with a view ahead of the harvesting vehicle 10.

In preferred embodiments, the sensor 90 is a LIDAR sensor configured to generate point cloud data representing the region ahead of the harvesting vehicle 10. Alternatively, the sensor 90 may comprise any laser- or photogrammetry-based sensor (or plurality of sensors) configured to acquire point cloud data or a representation of the surfaces of objects in a three-dimensional (3D) space.

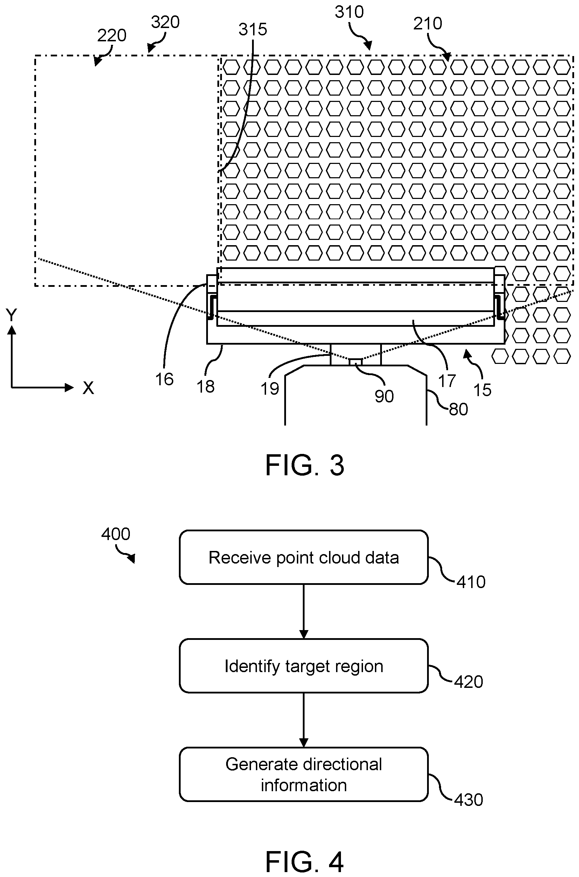

FIGS. 2 and 3 conceptually illustrate side- and top-views, respectively, of a portion of the harvesting vehicle 10 for further contextualization. In particular, FIGS. 2 and 3 illustrate the header 15 and the front portion of the user support 80 of the harvesting vehicle 10 during a harvesting procedure.

Crop 210 is cut and gathered by the header 15 of the harvesting vehicle 10, as previously explained. More specifically, the cutting bar 16 cuts the crop 210 at a base of the crop. Preferably, the reel 17 is positioned to engage with an upper part of the crop 210 to perform crop separation and guiding towards the header 15.

The crop leaves behind stubble 220 after being cut. The stubble 220 therefore represents the remaining part of the original crop that has not been cut by the cutting bar 16, and is therefore usually the height of the cutting bar 16 from the ground surface 350.

The sensor 90 is depicted as having a view ahead of the harvesting vehicle 10. Specifically, in the present example, the view of the sensor 90 extends from just in front of the header 15 to a predefined distance ahead of the harvesting vehicle 10. The view of the sensor 90 also extends beyond the lateral extent of the header 15, such that the sensor can "see" (i.e., acquire data from) regions either side of the region that is directly in front of the harvesting vehicle 10.

A field of crop is typically harvested as a series of rows. Specifically, the harvesting vehicle will drive straight across the field from one side to another, thereby harvesting a row of crop, before turning around and harvesting another row. Each time the harvesting vehicle travels from one side of the field to another it is known as a "pass".

For increased harvesting efficiency, it is desirable for the field to be fully harvested in as few passes as possible. This may be achieved by increasing the amount of crop harvested in each pass, while also harvesting or intersecting at an edge between harvested and unharvested crop.

This idea is conceptually illustrated in FIG. 3. In the present example, the harvesting vehicle 10 is depicted as harvesting from a region of (unharvested) crop 310. A region of stubble 320 is present on the left side of the harvesting vehicle 10, representing crop that was harvested on the previous pass.

The harvesting vehicle 10 will desirably harvest (in the present pass) at an edge/border 315 between the stubble 320 and the crop 310. In other words, the header 15 will extend past (i.e., intersect) the edge 315 such that a portion of the header 15 lies in the region of stubble 320. This is to prevent/reduce a risk of some amount of unharvested crop being left (i.e., after the present pass) adjacent to the current edge 315, which would require an additional pass to harvest, potentially wasting energy/fuel and time.

The harvesting vehicle 10 will thus desirably be operated to harvest at an edge of unharvested crop. For example, an operator may desirably drive the harvesting vehicle 10 along a specific direction to intersect the edge of unharvested crop. In another example, an autonomous control system may be preprogrammed/preconfigured to harvest along a target route that results in harvesting at an edge of unharvested crop.

It is recognized, however, that such operation may be prone to error, such as an operator misjudging a direction to drive the harvesting vehicle 10 in, or an autonomous control system losing an accurate position of the harvesting vehicle 10. There is thus a corresponding desire to determine or generate directional information for the harvesting vehicle 10 (e.g., during a harvesting procedure) that indicates a target direction for the harvesting vehicle 10 to progress in for harvesting at an edge of unharvested crop.

FIG. 4 illustrates a proposed method 400 of generating directional information for a harvesting vehicle.

The method 400 comprises a step 410 of receiving point cloud data comprising a representation of a region ahead of the harvesting vehicle that preferably contains harvested and unharvested crop.

As previously mentioned, the point cloud data may be generated by a sensor mounted on the harvesting vehicle, e.g., the sensor 90 illustrated in FIGS. 1-3. The sensor may iteratively generate (e.g., as the harvesting vehicle progresses through a field) point cloud data representing a region ahead of the harvesting vehicle. Step 410 may therefore comprise receiving the point cloud data from this sensor.

Alternatively, or additionally, the point cloud data may be generated by a further sensor mounted on a vehicle, machine, or device other than the harvesting vehicle, e.g., an adjacent trailer, an overhead drone, etc. The other device may follow the harvesting vehicle as it progresses across a field to acquire point cloud data from a region ahead of the harvesting vehicle. Step 410 may therefore comprise receiving the point cloud data from this further sensor.

Preferably, the sensor will have a known (i.e., predetermined) or measurable spatial/positional relationship with respect to the harvesting vehicle and/or elements of the harvesting vehicle, e.g., a crop cutting arrangement of the harvesting vehicle. In this way, a position of objects in the region represented by the point cloud data (as measured by the sensor) can be related to a position of, or on, the harvesting vehicle.

When the sensor is mounted on the harvesting vehicle, the position of the sensor relative to other parts of the harvesting vehicle will be fixed, and thus can be easily predetermined. Alternatively, when the sensor is mounted on a device other than the harvesting vehicle, a spatial relationship between the sensor and the harvesting vehicle may be iteratively determined during a harvesting procedure, e.g., using respective guidance information generated by respective guidance systems of the harvesting vehicle and of the other device.

To provide further context, the point cloud data is 3D point cloud data that comprises a plurality of data elements (i.e., data points) where each data element represents a position on the surface of an object (e.g., unharvested crop) in 3D space. Each data element may be described in Cartesian (i.e., x, y, z) coordinates measured relative to the sensor (e.g., as depicted in FIGS. 2 and 3).

The point cloud data thus forms a representation of the surfaces of unharvested crop and harvested crop (i.e., stubble) ahead of the harvesting vehicle, from which regions comprising different crop can be identified.

Accordingly, the method 400 also comprises a step 420 of processing the point cloud data using one or more image processing algorithms to identify a target region in the point cloud data. Specifically, the target region bounds a representation of unharvested crop in the point cloud data.

Referring to the example of FIG. 3, the target region may represent the region 310 of unharvested crop ahead of the harvesting vehicle 10 (and within view of the sensor 90).

The method 400 further comprises a step 430 of generating the directional information by processing an edge of the target region that represents an edge/border between unharvested crop and harvested crop. In particular, the generated directional information indicates (at least) a target direction for the harvesting vehicle to harvest the edge of the unharvested crop.

Referring again to the example of FIG. 3, the edge of the target region may represent the edge 315 between the region of unharvested crop 310 and the region of stubble 320.

Preferably, the target direction (indicated by the directional information) will indicate a direction in which a crop cutting arrangement/header of the harvesting vehicle is predicted to intersect with the edge of the unharvested crop. From the previous disclosure, it will be understood that the header is the part of the harvesting vehicle most relevant to the harvesting of crop. Thus, in order to harvest the edge of the unharvested crop, the header should preferably intersect the edge, such that unharvested crop at the edge is not missed during harvesting.

In some examples, the generated directional information may describe a vector (or a series of vectors) or a path that indicates a direction for the harvesting vehicle to progress/travel in that is predicted to result in the harvesting vehicle harvesting the edge of the unharvested crop, e.g., the header intersecting the edge of the unharvested crop. The vector or path will thus be associated with the aforementioned edge, e.g., lying in, or otherwise being parallel and/or tangential to, the edge.

It will be understood that, in order for the harvesting vehicle to travel in the direction described by the vector or path, the harvesting vehicle may be required to face a direction parallel to that described by the vector or path. Thus, the vector or path (or the directional information more generally) may indicate a desired rotation (e.g., steering) of the harvesting vehicle to face a target direction.

Additionally, an origin or start position of the vector or path may be associated with a reference position on the harvesting vehicle. The vector or path (or the directional information more generally) may thus indicate a desired alignment of the harvesting vehicle relative to the target direction. For example, this may comprise moving the harvesting vehicle to position the reference position (on the harvesting vehicle) with the origin/start position.

In accordance with the above disclosure, the directional information may be associated with (or in other words defined by) one or more co-ordinate systems of the harvesting vehicle (e.g., defined by the guidance system 85 and/or the sensor 90 of FIGS 1-3). A target direction indicated by the directional information may thus be defined relative to the position and/or orientation of the harvesting vehicle via the co-ordinate system(s).

Various approaches for performing steps of the method 400 are envisaged, a non-limiting number of which are hereafter described.

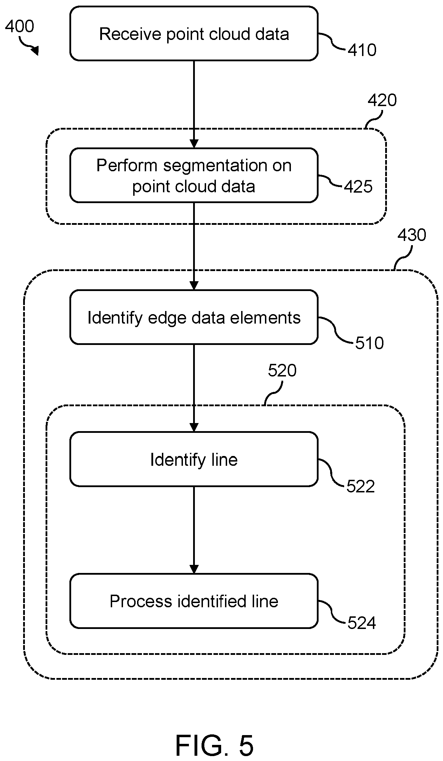

FIG. 5 illustrates an embodiment of the method 400 that employs example approaches for performing steps 420 and 430. These approaches make use of (or processed forms of) the point cloud data obtained in step 410.

According to the present embodiment, step 420 of identifying the target region in the point cloud data comprises a sub-step 425 of performing segmentation on the point cloud data to identify the representation of unharvested crop. More specifically, sub-step 425 comprises processing the point cloud data using a segmentation algorithm (such as an Al-based segmentation algorithm) to identify parts of the point cloud data comprising the representation of unharvested crop.

For example, sub-step 425 may comprise identifying which data elements of the point cloud data are associated with (i.e., represent a position on the surface of) unharvested crop and are not associated with unharvested crop (e.g., associated with harvested crop/stubble). This identification may be based on characteristics associated with the data elements and/or groups of data elements of the point cloud data, e.g., a height above ground, a topology/shape, etc.

The point cloud data may thus be segmented into regions of different crop composition (e.g., unharvested and harvested) and a corresponding target region containing the representation of unharvested crop may be identified.

Following with the present embodiment, step 430 of generating the direction information comprises a sub-step 510 of processing the target region (or more specifically the data elements contained within the target region), identified in step 420, to identify edge data elements. Specifically, the edge data elements are data elements contained within the target region that represent (e.g., form part of, or are substantially close to) an edge of the target region.

In particular, the edge data elements are associated with unharvested crop (in the region represented by the point cloud data) that from a border with a neighboring region of harvested crop/stubble. Using the example of FIG. 3, the edge data elements may represent unharvested crop in region 310 that is adjacent to the edge 315.

The edge data elements therefore represent the edge of the unharvested crop that will desirably be harvested.

Accordingly, step 430 comprises a further sub-step 520 of processing the identified edge data elements to generate the directional information. In other words, the directional information is generated responsive to the identified edge data elements.

In the present embodiment, sub-step 520 comprises performing segmentation on the identified edge data elements to identify a line representing the edge of the target region (i.e., sub-step 522).

It will be understood that the identified line (preferably) lies in, or is parallel to, a 2D plane representing a plane of travel of the harvesting vehicle (e.g., the x-y plane in FIG. 3).

The identified line thus traces the border between unharvested crop and harvested crop. In order for the harvesting vehicle to harvest the edge of the unharvested crop, it is therefore desirable for the harvesting vehicle (or more specifically a header of the harvesting vehicle) to intersect the identified line. In this way, the edge of the unharvested crop will be collected by the harvesting vehicle, reducing the risk of unharvested crop being missed.

Accordingly, sub-step 520 further comprises processing the identified line to generate the directional information (i.e., sub-step 524). In particular, a target direction may be determined responsive to the identified line, with the generated directional information thus being indicative of this target direction. For example, the target direction may correspond to a direction of travel for the harvesting vehicle that is substantially parallel to, tangential to and/or along the identified line. As another example, the target direction may correspond to a direction of travel for the harvesting vehicle that causes a point/position on the harvesting vehicle (e.g., a position on the header) to trace out the identified line.

Sub-step 524 may thus output directional information that describes a vector or path associated with the identified line, e.g., lying on, or being parallel or tangential to, the identified line. In particular, the vector or path associated with the identified line will indicate the target direction for the harvesting vehicle.

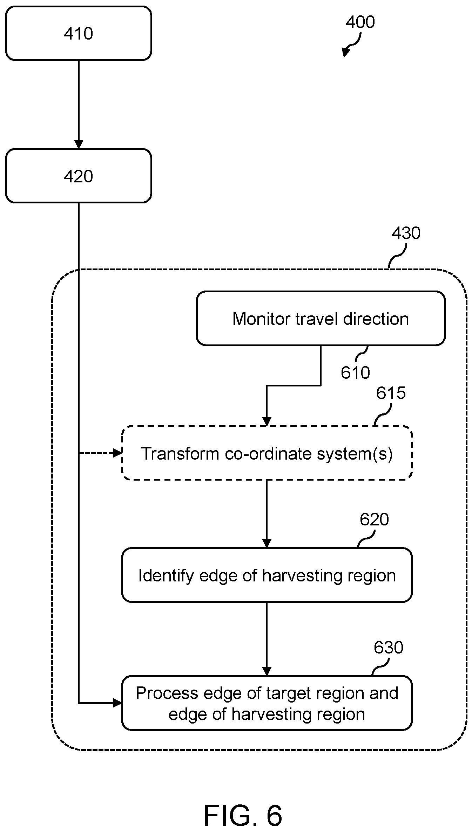

FIG. 6 illustrates another embodiment of the method 400 that employs another example approach for performing step 430. This approach makes use of the point cloud data obtained in step 410, and the target region identified in step 420. More specifically, this approach makes use of the edge of the target region. Thus, the present embodiment may also make use of one or more sub-steps disclosed in the embodiment of FIG. 5, e.g., sub-step 510, sub-step 520, etc.

According to the present embodiment of FIG. 6, step 430 of generating the directional information may comprise a sub-step 610 of monitoring a travel direction of the harvesting vehicle.

The travel direction may describe a (current) position, orientation and/or velocity of the harvesting vehicle. The travel direction may thus indicate where the harvesting vehicle currently is and/or is facing, and/or where the harvesting vehicle is expected to be at a future time. The travel direction may be monitored by, or with reference to, a guidance system of the harvesting vehicle (e.g., the guidance system 85 of FIG. 1).

It is recognized that, when harvesting a field of crop, a harvesting vehicle may be continuously moving. It may therefore be desirable to monitor where the harvesting vehicle is heading to ensure that the harvesting vehicle is (and will continue to) harvest at an edge of unharvested crop.

Accordingly, step 430 of FIG. 6 further comprises a sub-step 620 of processing the monitored travel direction to identify an edge of a harvesting region in the point cloud data. Specifically, the harvesting region bounds a representation of a zone/area that the harvesting vehicle would harvest if proceeding in the monitored travel direction.

The harvesting region may be representative of a size/width of the header of the harvesting vehicle. For example, the harvesting region may be a rectangle with a width given by the width of the header, and a length given by the distance the header is expected travel over a predefined time (e.g., as determined from the velocity of the harvesting vehicle).

In the present context, the edge of the harvesting region corresponds to an edge/line that would be traced out by part of the harvesting vehicle (e.g., an end of the header) if proceeding in the monitored travel direction.

It can be recognized that, for the harvesting vehicle to harvest an edge of unharvested crop, it would be desirable for the harvesting region to (at least) contain the edge of the unharvested crop. Furthermore, to allow the harvesting vehicle to continue to harvest the edge of the unharvested crop as it moves forward, it would be desirable for the edge of the harvesting region to be aligned with the edge of the unharvested crop.

Step 430 of FIG. 6 thus further comprises a sub-step 630 of processing the edge of the target region (representing the edge of the unharvested crop) and the edge of the harvesting region to identify a target direction for the harvesting vehicle that would align the edge of the harvesting region with the edge of the target region.

Accordingly, the directional information can be generated to indicate this target direction. For example, the directional information may indicate an amount that the harvesting vehicle needs to turn/rotate by to align the edge of the harvesting region with the edge of the target region.

In some cases, it may also be desirable for the edge of the harvesting region to lie on top of, or at least be substantially close to, the edge of the target region, e.g., to increase the amount of crop contained within the harvesting region and thus harvested by the harvesting vehicle. The directional information may thus also indicate an amount of translational distance the harvesting vehicle needs to move by to shift the edge of the harvesting region closer to the edge of the target region.

In some cases, the monitored travel direction and the point cloud data may be defined using different co-ordinate systems. As mentioned previously, the point cloud data may be defined using a Cartesian co-ordinate system relative to a sensor that acquires the point cloud data. The sensor thus forms an origin or reference point for the co-ordinate system defining the point cloud data.

The monitored travel direction may also be defined using a Cartesian co-ordinate system but relative to a different reference point, most likely on the harvesting vehicle, e.g., a position of a guidance system (such as the guidance system 85 of FIG. 1). In some examples, the monitored travel direction may be defined using a co-ordinate system associated with measurements/units of the guidance system, e.g., satellite navigation co-ordinates.

Accordingly, in order to identify a harvesting region (which is dependent on the monitored travel direction) in the point cloud data, step 430 may comprise a sub-step 615 of transforming the co-ordinate system of the monitored travel direction and/or the point cloud data such that they share a common co-ordinate system.

For example, sub-step 615 may comprise transforming the point cloud data to the co-ordinate system of the monitored travel direction. This may be preferable as the co-ordinate system of the monitored travel direction is closely associated with the position, orientation and/or velocity of the harvesting vehicle (which is/are used to determine the harvesting region).

Though depicted in FIG. 6 as occurring immediately prior to sub-step 620, sub-step 615 may occur at different points in step 430 (or more generally at different points in the method 400) depending on which co-ordinate system(s) is/are being transformed. For example, transformation of the point cloud data may occur immediately after step 410.

The approaches illustrated by FIGS. 4-6 outline how directional information for a harvesting vehicle may be generated. Various approaches for how this directional information may be subsequently utilized are hereafter described.

In cases when the harvesting vehicle is being controlled by an operator, it may be appropriate to provide (i.e., communicate) the generated directional information to the operator, such that they can control movement/steering of the harvesting vehicle accordingly.

Certain embodiments of the method 400 may thus comprise controlling a display (e.g., of the harvesting vehicle, such as a display comprised by a user interface of the harvesting vehicle) to provide a user-perceptible output of the directional information.

One example of a suitable user-perceptible output may be a graphical representation of the harvesting vehicle displayed with the point cloud data (representing the crop ahead of the harvesting vehicle) overlayed with an indicator of the target direction (e.g., an arrow or vector in the point cloud data). An operator may thus interpret, from the user-perceptible output, a corresponding steering of the harvesting vehicle required to face, and/or move along, the target direction.

Furthermore, in embodiments where a (travel) direction of the harvesting vehicle is monitored (e.g., via a guidance system of the harvesting vehicle) the method 400 may also comprise controlling an alert system of the harvesting vehicle. In particular, the alert system may be controlled to generate a user-perceptible alert (such as an audible and/or visible alarm) in response to the monitored direction of the harvesting vehicle deviating by more than a predetermined amount from the target direction.

Such an alert may be useful for helping an operator to align the harvesting vehicle with the target direction (e.g., through the alert stopping when said alignment is satisfactory) and/or for notifying the operator when the harvesting vehicle is at risk of missing the edge of the unharvested crop (e.g., which may be caused by a lack of concentration from the operator).

In cases when the harvesting vehicle is controlled via an autonomous control system, the directional information may be used to directly control the steering and/or movement of the harvesting vehicle. Specifically, in certain embodiments, the method 400 may further comprise controlling a steering of the harvesting vehicle, responsive to the directional information, to follow the target direction.

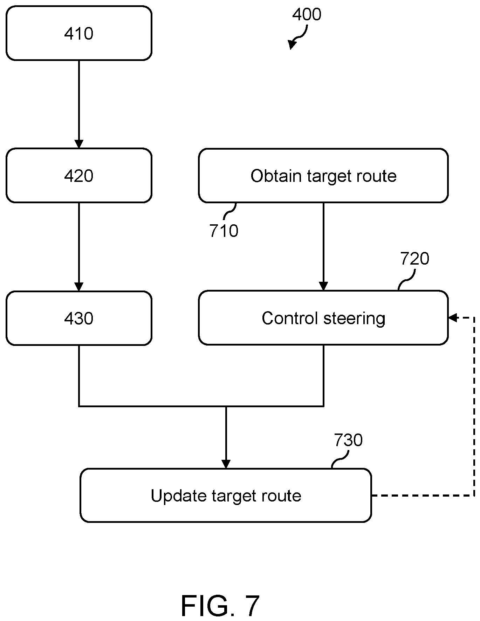

FIG. 7 illustrates a more specific embodiment of the method 400 that may be utilized by an autonomous control system. In particular, the method 400 of FIG. 7 relates to controlling the harvesting vehicle according to a target route through an area for harvesting by the harvesting vehicle, e.g., a field of crop.

The target route may be generated from mapping data of the area for harvest. As an example, the mapping data may comprise satellite images/data of the area for harvest that describe corresponding dimensions (e.g., lateral sizes) for the area for harvest.

The target route may correspond to a path, or a set of connected co-ordinates, though the mapping data. For example, the target route may describe a series of passes through the area for harvest.

The method 400 of FIG. 7 comprises a step 710 of obtaining the target route. For example, step 710 may comprise the autonomous control system retrieving the target route from a memory.

The method 400 of FIG. 7 further comprises a step 720 of controlling the steering of the harvesting vehicle to follow the target route. As mentioned previously, this may be achieved with reference to guidance information for the harvesting vehicle provided by a guidance system, e.g., used to monitor the position and/or progress of the harvesting vehicle along the target route and control the steering of the harvesting vehicle accordingly.

It will be recognized, however, that such autonomous control of the harvesting vehicle may be prone to errors. These may be intrinsic errors in the target route, e.g., the spacing between passes of the target route being too large, or errors related to losing accurate positional information of the harvesting vehicle - e.g., due to intermittent or loss of signal with a satellite and/or base station (e.g., for RTK GNS systems). As such, continued control of the harvesting vehicle according to the initial target route may result in unharvested crop being missed.

The method 400 of FIG. 7 may therefore comprises a step 730 of updating the target route responsive to the directional information. In particular, this approach takes into account "live" data acquired in the vicinity (i.e., ahead) of the harvesting vehicle, which can provide a more accurate description of the area being harvested by the harvesting vehicle than the target route alone. The target route can thus be updated based on the live data so that a risk of the harvesting vehicle missing unharvested crop is reduced (e.g., by adjusting the target route so that the harvesting vehicle harvests at an edge of the unharvested crop).

Step 730 may comprise updating the entirety of the target route, e.g., by applying a global translation to the target route, or just a part of the target route, such as a part of the target route that the harvesting vehicle is currently on/performing.

Following step 730, the method 400 of FIG. 7 may return to step 720, where the steering of the harvesting vehicle is now controlled according to the updated target route. The target route may also be subsequently updated again as the harvesting vehicle progresses through the target route according to newly generated directional information.

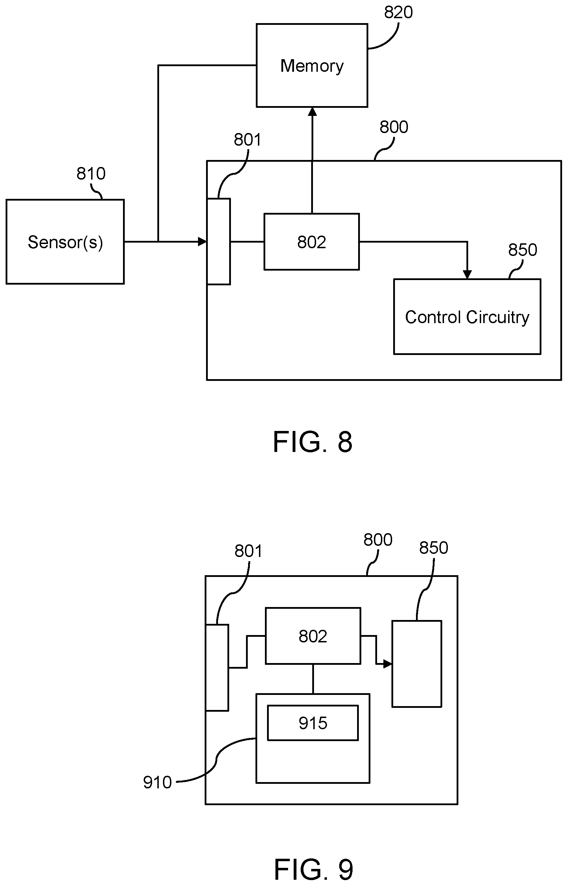

FIG. 8 illustrates a control system 800 according to an embodiment. The control system 800 may be formed as an aspect of a harvesting vehicle (e.g., the harvesting vehicle 10 of FIGS. 1-3) and configured to control aspects of the harvesting vehicle. In particular, the control system 800 comprises a processing system 802 configured to perform any herein described method 400.

The processing system 802 may thereby obtain at least point cloud data containing a representation of a region ahead of the harvesting machine. The point cloud data is captured using one or more sensors 810, e.g., mounted on the harvesting vehicle.

The processing system 802 may receive the point cloud data directly from the one or more sensors 810 or from a memory or storage unit 820 (i.e., the one or more sensors 810 may store the point cloud data in the memory 820 rather than providing it to the processing system 800).

The control system 800 may comprise an input interface 801 configured to receive the point cloud data and thereby provide the point cloud data to the processing system 802.

The processing system 802 is configured to process at least the point cloud data using one or more image processing algorithms to generate directional information for the harvesting vehicle. Procedures for performing this method/process have been previously described.

The processing system 802 may be configured to output the generated directional information, or signals indicative of the generated directional information, e.g., for the purposes of controlling the harvesting vehicle according to the generated directional information.

In some examples, the processing system 802 is configured to output a control signal to control circuitry 850 to control operation and/or parameters of one or more features of the harvesting vehicle. Thus, the processing system 802 may provide a control signal to control circuitry 850 for directing the harvesting vehicle along a target direction indicated by the generated directional information.

In some examples, the generated directional information is used to control a user interface, such as a display. This may be used, for instance, to provide (at the user interface) a visual representation of the generated directional information.

In some examples, any data produced by the processing system 802, e.g., the generated directional information, is stored in the memory 820.

FIG. 9 illustrates an embodiment of the control system 800 described with reference to FIG. 8. The control system 800, via the processing system 802, is able to carry out or perform one or more embodiments of an invention.

The control system 800 comprises an input interface 801 that receives communications from one or more inputting devices and provides them to the processing system 802. Examples of suitable inputting devices include external memories, sensors and so on.

In one example, the processing system 802 may comprise an appropriately programmed or configured single-purpose processing device. Examples may include appropriately programmed field-programmable gate arrays or complex programmable logic devices.

As another example, the processing system 802 may comprise a general-purpose processing system (e.g. a general-purpose processor or microprocessor) that executes a computer program 915 comprising code (e.g. instructions and/or software) carried by a memory 910 of the control system 800.

The memory 910 may be formed from any suitable volatile or non-volatile computer storage element, e.g. FLASH memory, RAM, DRAM, SRAM, EPROM, PROM, CD-ROM and so on. Suitable memory architectures and types are well known to the person skilled in the art.

The computer program 915, e.g. the software, carried by the memory 910 may include comprise a sequence of instructions that are executable by the processing unit for implementing logical functions to carry out the desired method or procedure. Each instruction may represent a different logical function, step or sub-step used in performing a method or process according to an embodiment. The computer-program may be formed from a set of subprograms, as would be known to the skilled person. The computer program 915 may be written in any suitable programming language that can be interpreted by the processing system 802 for executing the instructions. Suitable programming languages are well known to the skilled person.

Different components of the control system 800 may interact or communicate with one another via one or more intra-system communication systems (not shown), which may include communication buses, wired interconnects, analogue electronics, wireless communication channels (e.g. the internet) and so on. Such intra-system communication systems would be well known to the skilled person.

It is not essential for the control system 800 to be formed on a single device, e.g. a single computer. Rather, any of the system blocks (or parts of system blocks) of the illustrated processing system may be distributed across one or more computers.

The skilled person would be readily capable of developing a control system and/or processing system for carrying out any herein described method. Thus, each step of the flow chart may represent a different action performed by a processing system, and may be performed by a respective module of the processing system.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

A computer program may be stored on a computer-readable medium, itself an embodiment of the invention. A "computer-readable medium" is any suitable mechanism or format that can store a program for later processing by a processing unit. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method (400) of generating directional information for a harvesting vehicle (10), the computer-implemented method comprising:
receiving point cloud data comprising a representation of a region ahead of the harvesting vehicle (410);
processing the point cloud data to identify a target region, in the point cloud data, that bounds a representation of unharvested crop in the point cloud data (420); and
generating the directional information by processing an edge of the target region (430), wherein the directional information indicates a target direction for the harvesting vehicle to harvest the edge of the unharvested crop.

2. The computer-implemented method of claim 1, wherein:
the harvesting vehicle comprises:
a sensor (90) configured to generate the point cloud data; and
a crop cutting arrangement (15), having a predetermined spatial relationship with respect to the sensor; and
the target direction indicates a direction in which the crop cutting arrangement is predicted to intersect with the edge of the unharvested crop.

3. The computer-implemented method of any one of claims 1 or 2, wherein processing the point cloud data comprises performing segmentation on the point cloud data to identify the representation of unharvested crop (425).

4. The computer-implemented method of any one of claims 1 to 3, wherein generating the directional information comprises:
processing the target region to identify edge data elements (510), being data elements of the point cloud data that represent an edge of the target region; and
processing the identified edge data elements to generate the directional information (520).

5. The computer-implemented method of claim 4, wherein processing the identified edge data elements comprises:
performing segmentation on the identified edge data elements to identify a line representing the edge of the target region (522); and
processing the identified line to generate the directional information (524).

6. The computer-implemented method of any one of claims 1 to 5, wherein generating the directional information comprises:
monitoring a travel direction of the harvesting vehicle (610);
processing the monitored travel direction to identify an edge of a harvesting region in the point cloud data (620), wherein the harvesting region bounds a representation of a zone that the harvesting vehicle would harvest if proceeding in the monitored travel direction; and
processing the edge of the target region and the edge of the harvesting region to identify a target direction for the harvesting vehicle that would align the edge of the harvesting region with the edge of the target region (630).

7. The computer-implemented method of claim 6, wherein:
the monitored travel direction and the point cloud data are defined using different co-ordinate systems; and
generating the directional information comprises transforming the co-ordinate system of the monitored travel direction and/or the point cloud data such that the travel direction and the point cloud data share a common co-ordinate system (615).

8. The computer-implemented method of claim 7, wherein transforming the co-ordinate system of the monitored travel direction and/or the point cloud data comprises transforming the point cloud data to the co-ordinate system of the monitored travel direction.

9. The computer-implemented method of any one of claims 1 to 8, further comprising controlling a display to provide a user-perceptible output of the directional information.

10. The computer-implemented method of any one of claims 1 to 9, comprising:
monitoring a direction of the harvesting vehicle; and
controlling an alert system to generate a user-perceptible alert responsive to the monitored direction deviating by more than a predetermined amount from the target direction.

11. The computer-implemented method of any one of claims 1 to 10, further comprising controlling a steering of the harvesting vehicle, responsive to the directional information, to follow the target direction.

12. The computer-implemented method of any one of claims 1 to 11, further comprising:
obtaining a target route for the harvesting vehicle (710), wherein the target route is generating using mapping data of an area for harvesting by the harvesting vehicle;
controlling a steering of the harvesting vehicle to follow the target route (720); and
updating the target route responsive to the directional information (730).

13. A computer program product comprising computer program code means which, when executed on a computing device having a processing system (802), cause the processing system to perform all of the steps of the computer-implemented method according to any one of claims 1 to 12.

14. A processing system (802) for generating directional information for a harvesting vehicle (10), wherein the processing system is configured to:
receive point cloud data comprising a representation of a region ahead of the harvesting vehicle;
process the point cloud data to identify a target region, in the point cloud data, that bounds a representation of unharvested crop in the point cloud data; and
generate the directional information by processing an edge of the target region, wherein the directional information indicates a target direction for the harvesting vehicle to harvest the edge of the unharvested crop.

15. A harvesting vehicle (10) comprising:
the processing system of claim 14; and
a sensor (90) configured to generate the point cloud data.
